# EUROPEAN PATENT APPLICATION

(11) **EP 4 711 496 A1**
(43) Date of publication of application: **18.03.2026**
(21) Application number: 25194274.4
(22) Date of filing: 06.08.2025
(51) Int. Cl.: C25B 1/04, C25B 1/23, C25B 1/27, C25B 3/26, C25B 9/23

(54) **ELECTROCHEMICAL REACTION DEVICE AND METHOD OF MANUFACTURING ELECTROCHEMICAL REACTION DEVICE**

(30) Priority: 17.09.2024 JP 2024160222
(71) Applicant: KABUSHIKI KAISHA TOSHIBA, Kawasaki-shi, Kanagawa (JP)
(72) Inventor: MIKOSHIBA, Satoshi, Kawasaki-shi, Kanagawa (JP); KOFUJI, Yusuke, Kawasaki-shi, Kanagawa (JP); YONETSU, Maki, Kawasaki-shi, Kanagawa (JP); KITAGAWA, Ryota, Kawasaki-shi, Kanagawa (JP); INOUE, Yusuke, Kawasaki-shi, Kanagawa (JP)
(74) Representative: Hoffmann Eitle

(57) **Abstract**

The electrochemical reaction device includes: an electrochemical reaction structure including a cathode, an anode, a diaphragm having a first surface on the cathode and a second surface on the anode, a cathode flow path, and an anode flow path; a first flow path through which a first fluid containing a reducible material to the cathode flow path flows; a second flow path through which a second fluid containing water to the anode flow path flows; a third flow path through which a third fluid containing the reduction product from the cathode flow path flows; and a fourth flow path through which a fourth fluid containing water and oxygen from the anode flow path flows. The diaphragm has concentration gradient in which a concentration of a chemical species decreases from the second surface to the first surface, the chemical species being configured to decompose, capture, or inactivate an active oxygen specie.

## Description

### FIELD

Arrangements described herein relate generally to an electrochemical reaction device and a method of manufacturing an electrochemical reaction device.

### BACKGROUND

In recent years, there has been a concern over depletion of fossil fuel resources such as petroleum and coal, and expectations for sustainable renewable energy increases. From the viewpoint of such energy problems, environmental problems, and other problems, power to chemicals (P2C) technology is under development which electrochemically reduces carbon dioxide using renewable energies such as solar power to generate storable chemical energy sources. An electrochemical reaction device such as a carbon dioxide reaction device, including an electrolysis device that enables the P2C technology includes, for example, an anode that oxidizes water (H₂O) to produce oxygen (O₂), and a cathode that reduces carbon dioxide (CO₂) to produce carbon compounds. The anode and cathode of the carbon dioxide reaction device are connected to solar power generation, hydroelectric power generation, wind power generation, geothermal power generation, or other power sources derived from renewable energy.

The cathode of the carbon dioxide reaction device is, for example, immersed in water containing dissolved carbon dioxide or placed in contact with carbon dioxide flowing through a flow path. The cathode reduces carbon dioxide to produce carbon monoxide (CO), formic acid (HCOOH), methanol (CH₃OH), methane (CH₄), ethanol (C₂H₅OH), ethane (C₂H₆), ethylene (C₂H₄), formaldehyde (HCHO), ethylene glycol (C₂H₆O₂), acetic acid (CH₃COOH), propanol (C₃H₇OH), or other carbon compounds by obtaining a reduction potential of carbon dioxide from power sources derived from the renewable energy sources. The anode is placed in contact with an electrolytic solution containing water to produce oxygen and hydrogen ions (H⁺). In such a carbon dioxide reaction device, there is a need to increase utilization efficiency of carbon dioxide, as well as utilization efficiency and value of carbon dioxide reduction products.

### SUMMARY

An electrochemical reaction device of an arrangement includes: an electrochemical reaction structure including a cathode having a reduction catalyst that promotes a reduction reaction of reducing a reducible material to produce a reduction product, the reducible material being carbon dioxide or nitrogen, an anode having an oxidation catalyst that promotes an oxidation reaction of oxidizing water to produce oxygen, a diaphragm having a first surface facing on the cathode and a second surface facing on the anode, a cathode flow path facing on the cathode, and an anode flow path facing on the anode; a first flow path connected to an inlet of the cathode flow path and through which a first fluid flows, the first fluid being supplied to the cathode flow path and containing the reducible material; a second flow path connected to an inlet of the anode flow path and through which a second fluid flows, the second fluid being supplied to the anode flow path and containing the water flows; a third flow path connected to an outlet of the cathode flow path and through which a third fluid flows, the third fluid being discharged from the cathode flow path and containing the reduction product; and a fourth flow path connected to an outlet of the anode flow path and through which a fourth fluid flows, the fourth fluid being discharged from the anode flow path and containing the water and the oxygen. The diaphragm has a concentration gradient in which a concentration of a chemical species decreases from the second surface to the first surface, the chemical species being configured to decompose, capture, or inactivate an active oxygen species.

### BRIEF DESCRIPTION OF THE DRAWINGS

FIG. 1 is a schematic view illustrating an example configuration of an electrochemical reaction device.
FIG. 2 is a schematic view illustrating an example structure of a diaphragm.

### DETAILED DESCRIPTION

Arrangements will be hereinafter explained with reference to the drawings. In the arrangements, substantially the same components are denoted by the same reference signs, and an explanation thereof is omitted as appropriate. The drawings are schematic, and the relation of thickness and planar dimension, a thickness ratio among parts, and so on may be different from actual ones.

In this specification, "connect" may include not only direct connection but also indirect connection, unless otherwise specified.

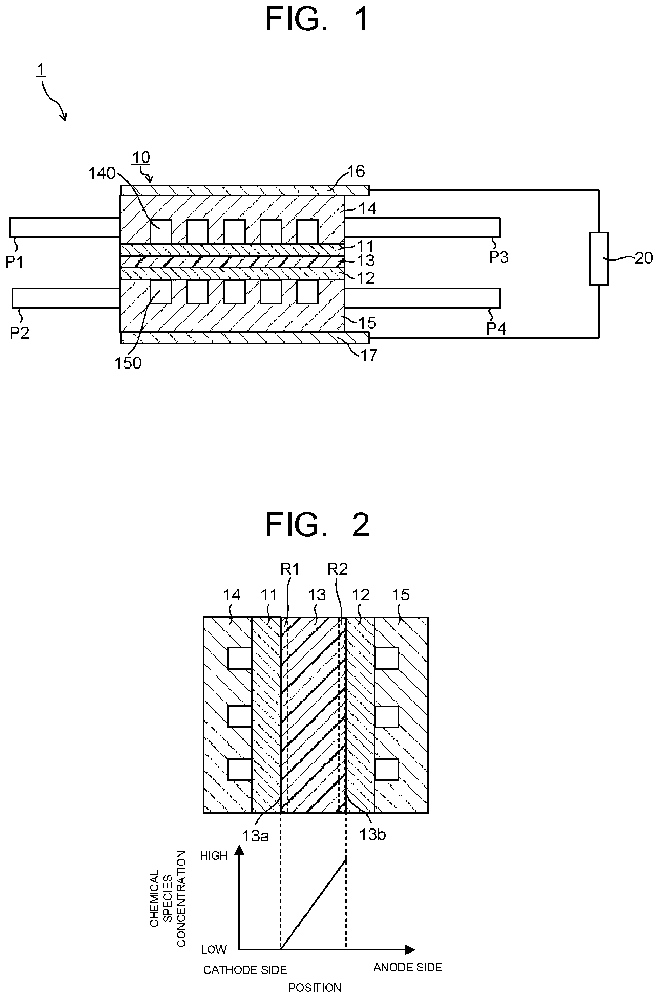

FIG. 1 is a schematic view illustrating an example configuration of an electrochemical reaction device. FIG. 1 illustrates an electrochemical reaction device 1. The electrochemical reaction device 1 has an electrochemical reaction structure 10, a flow path P1, a flow path P2, a flow path P3, and a flow path P4.

The electrochemical reaction structure 10 has a cathode 11, an anode 12, a diaphragm 13, a flow path plate 14, a flow path plate 15, a current collector 16, and a current collector 17.

The cathode 11 is a reduction electrode for causing a reduction reaction of at least one reducible material (substance to be reduced), for example. Examples of the reducible material include nitrogen and carbon dioxide, for example. Reduction products can be produced by reducing the reducible material.

The cathode 11 reduces, for example, carbon dioxide supplied as reducible material gas or carbon dioxide contained in a first electrolytic solution (cathode solution) to produce a reduction product, a carbon compound. Examples of the carbon compound include carbon monoxide, formic acid, methanol, methane, ethanol, ethane, ethylene, formaldehyde, ethylene glycol, acetic acid, propanol, and the like. In the cathode 11, a side reaction to produce hydrogen through a reduction reaction of water sometimes occurs in addition to the carbon dioxide reduction reaction. The cathode 11 may reduce, for example, nitrogen supplied as the reducible material gas to produce the reduction product, ammonia.

The cathode 11 has a reduction catalyst for promoting the reduction reaction that reduces the reducible material and produces the reduction product, for example. The reduction catalyst can be formed using a material that decreases activation energy for reducing the reducible material, for example. In other words, the reduction catalyst can be formed using a material that decreases an overpotential in the production of the reduction product through the reduction reaction of the reducible material, for example.

The cathode 11 can be formed using a metal material or a carbon material, for example. Examples of the metal material include metals such as gold, aluminum, copper, silver, platinum, palladium, zinc, mercury, indium, nickel, and titanium, alloys containing any of these metals, and the like. Examples of the carbon material include graphene, carbon nanotube (CNT), fullerene, ketjen black, and the like. The material is not limited to these, and the cathode 11 may be formed using a metal complex such as a Ru complex or a Re complex, or organic molecules having an imidazole skeleton or a pyridine skeleton. The cathode 11 may be formed using a mixture of a plurality of materials. The cathode 11 may have a structure in which the reduction catalyst in a thin film form, a lattice form, a granular form, a wire form, or other forms is provided on a conductive base material, for example. A kind of the reduction product produced through the reduction reaction differs depending on a kind of the reduction catalyst.

The anode 12 is an oxidation electrode for causing an oxidation reaction of at least one oxidizable material (substance to be oxidized), for example. Examples of the oxidizable material include water. The anode 12 oxidizes the oxidizable material such as a substance or ions in a second electrolytic solution (anode solution) to produce oxygen, for example.

The anode 12 has an oxidation catalyst for promoting the oxidation reaction that oxidizes water and produces oxygen, for example. The oxidation catalyst can be formed using a material that decreases activation energy in the oxidation of the oxidizable material, in other words, a material that decreases a reaction overpotential, for example. Examples of the oxidation reaction in the anode 12 include a reaction to oxidize water and produce oxygen or a hydrogen peroxide solution, a reaction to oxidize chloride ions (Cl⁻) and produce chlorine, a reaction to oxidize carbonate ions or hydrogen carbonate ions and produce carbon dioxide, and the like.

Examples of the oxidation catalyst include a metal material. Examples of the metal material include ruthenium, iridium, platinum, cobalt, nickel, iron, manganese, tantalum, zirconium, tin, and the like. Examples of the metal material further include binary metal oxide, ternary metal oxide, quaternary metal oxide, and other metal oxides. Examples of the binary metal oxide include manganese oxide (Mn-O), iridium oxide (Ir-O), nickel oxide (Ni-O), cobalt oxide (Co-O), iron oxide (Fe-O), tin oxide (Sn-O), indium oxide (In-O), ruthenium oxide (Ru-O), and other binary metal oxides. Examples of the ternary metal oxide include nickel-iron oxide (Ni-Fe-O), nickel-cobalt oxide (Ni-Co-O), lanthanum-cobalt oxide (La-Co-O), nickel-lanthanum oxide (Ni-La-O), strontium-iron oxide (Sr-Fe-O), and other ternary metal oxides. Examples of the quaternary metal oxide include lead-ruthenium-iridium oxide (Pb-Ru-Ir-O), lanthanum-strontium-cobalt oxide (La-Sr-Co-O), and other quaternary metal oxides, for example. The material is not limited to these and the oxidation catalyst may be formed using metal hydroxide-containing metal such as cobalt, nickel, iron, or manganese or a metal complex such as a ruthenium complex or an iron complex. Further, the oxidation catalyst may be formed using a mixture of a plurality of materials.

The anode 12 may be formed using a composite material containing both the oxidation catalyst and a conductive material. Examples of the conductive material include carbon materials such as carbon black, activated carbon, fullerene, carbon nanotube, graphene, ketjen black, and diamond, transparent conductive oxides such as indium tin oxide (ITO), zinc oxide (ZnO), fluorine-doped tin oxide (FTO), aluminum-doped zinc oxide (AZO), and antimony-doped tin oxide (ATO), metals such as copper, aluminum, titanium, nickel, silver, tungsten, cobalt, and gold, an alloy containing at least one of these metals, and the like. For example, the anode 12 may have a structure in which the oxidation catalyst in a thin film form, a lattice form, a granular form, a wire form, or other forms is provided on a conductive base material. The conductive base material can be formed using a metal material containing titanium, a titanium alloy, or stainless steel, for example.

The diaphragm 13 is provided between the cathode 11 and the anode 12. The diaphragm 13 can serve as a partition between a cathode chamber 140 and an anode chamber 150. The diaphragm 13 allows ions such as hydrogen ions (H⁺), hydroxide ions (OH⁻), hydrogen carbonate ions (HCO₃⁻), and carbonate ions (CO₃²⁻) to move through. An electrochemical reaction cell having a two-chamber structure can be formed with the diaphragm 13. The diaphragm 13 may be provided in contact with the cathode 11 and the anode 12.

The diaphragm 13 can be formed using, for example, a membrane selectively allowing anions or cations to flow through. Consequently, it is possible to make a composition of the second electrolytic solution in contact with the anode 12 different from a composition of the first electrolytic solution in contact with the cathode 11, and it is possible to promote the reduction reaction or the oxidation reaction according to their difference such as ion intensity difference or pH difference. The diaphragm 13 may have a function of allowing the permeation of part of ions contained in the electrolytic solutions in which the cathode 11 and the anode 12 are immersed, that is, a function of blocking one kind or more of ions contained in the electrolytic solutions. This makes it possible to make the two electrolytic solutions different in pH or the like, for example. Further, as for the blocking of the ions, the diaphragm 13 may be a diaphragm that does not completely block the partial ions but exhibits the effect of limiting a movement amount of ion species to some extent.

The diaphragm 13 can be formed, for example, using an ion-exchange membrane such as NEOSEPTA (registered trademark) of ASTOM Corporation, SELEMION (registered trademark) and Aciplex (registered trademark) of AGC Inc., Fumasep (registered trademark) and fumapem (registered trademark) of Fumatech BWT GmbH, Nafion (registered trademark) of DuPont, which is a fluorocarbon resin formed of sulfonated and polymerized tetrafluoroethylene, lewabrane (registered trademark) of LANXESS AG, IONSEP (registered trademark) of IONTECH Inc., Mustang (registered trademark) of PALL Corporation, ralax (registered trademark) of Mega A.S., GORE-TEX (registered trademark) of W.L. Gore & Associates GmbH, Sustainion (registered trademark) of DIOXIDE MATERIALS, or PiperION (registered trademark) of Versogen. The ion-exchange membrane may be formed using a membrane whose basic structure is hydrocarbon, for example. An anion-exchange membrane may be formed using a membrane having an amine group, for example. In the case where the first electrolytic solution and the second electrolytic solution are different in pH, it is possible to keep the pH of these electrolytic solutions stable during their use by forming the diaphragm 13 using a bipolar membrane in which a cation-exchange membrane and the anion-exchange membrane are stacked.

The diaphragm 13 may be formed using, for example, a material such as: a silicone resin; a fluorine-based resin such as perfluoroalkoxyalkane (PFA), a perfluoroethylene-propane copolymer (FEP), polytetrafluoroethylene (PTFE), an ethylene-tetrafluoroethylene copolymer (ETFE), polyvinylidene fluoride (PVDF), polychlorotrifluoroethylene (PCTFE), an ethylene-chlorotrifluoroethylene copolymer (ECTFE), or polyethersulfone (PES); a porous membrane of ceramics; fillings filled with glass filters, agar, and so on; or an insulating porous body such as zeolite or oxide. A hydrophilic porous membrane is especially preferable as the material of the diaphragm 13 because its clogging with bubbles can be reduced.

The cathode 11, the anode 12, and the diaphragm 13 are stacked to form an electrochemical reaction cell. The electrochemical reaction structure 10 may have a cell stack in which a plurality of electrochemical reaction cells are stacked. Forming the cell stack results in an increase in the reaction amount of carbon dioxide per unit area, which enables an increase in the production amount of the carbon compound. The number of the plurality of electrochemical reaction cells stacked is preferably 10 or more and 150 or less, for example.

The flow path plate 14 forms the cathode chamber 140. The cathode chamber 140 is provided on a surface of the flow path plate 14 to face the cathode 11 and can form a cathode flow path. The cathode chamber 140 has an inlet through which a fluid is supplied to the cathode chamber 140 and an outlet through which a fluid is discharged from the cathode chamber 140. A surface shape of the cathode flow path is not limited, but a serpentine shape, for example. The flow path plate 14 can be formed using a conductive material such as a metal material or a carbon material.

The flow path plate 15 forms the anode chamber 150. The anode chamber 150 is provided on a surface of the flow path plate 15 to face the anode 12 and can form an anode flow path. The anode chamber 150 has an inlet through which a fluid is supplied to the anode chamber 150 and an outlet through which a fluid is discharged from the anode chamber 150. A surface shape of the anode flow path is not limited, but a serpentine shape, for example. The flow path plate 15 can be formed using a conductive material such as a metal material or a carbon material.

The current collector 16 is electrically connected to the cathode 11. For example, the current collector 16 may be provided on the flow path plate 14 opposite the cathode 11 and electrically connected to the cathode 11 through the flow path plate 14. The current collector 17 is electrically connected to the anode 12. For example, the current collector 17 may be provided on the flow path plate 15 opposite the anode 12 and electrically connected to the anode 12 through the flow path plate 15. The current collector 16 and the current collector 17 can each be formed using a conductive material containing a metal element such as titanium.

The current collector 16 and the current collector 17 may be connected to a power source 20. The power source 20 is capable of supplying power to the electrochemical reaction structure 10, for example. The power source 20 is capable of supplying the electrochemical reaction structure 10 with a voltage or a current for causing electrolytic reactions such as the oxidation reaction and the reduction reaction and is electrically connected to the cathode 11 and the anode 12. The reduction reaction in the cathode 11 and the oxidation reaction in the anode 12 are caused using the electric energy supplied from the power source 20. The power source 20 is connected to the current collector 16 and the current collector 17 by wiring, for example. Electric devices such as an inverter, a converter, and a battery may be installed between the electrochemical reaction structure 10 and the power source 20, as required. A method of driving the electrochemical reaction structure 10 may be of a constant-voltage type or a constant-current type.

The power source 20 may be a typical commercial power source, battery, or the like, or may be a power source that converts renewable energy into electric energy to supply it. Examples of such a power source include a power source that converts kinetic energy or potential energy such as wind power, hydropower, geothermal power, or tidal power into electric energy, a power source such as a solar cell having a photoelectric conversion element that converts light energy into electric energy, a power source such as a fuel cell or a storage battery that converts chemical energy into electric energy, and a power source such as a device that converts vibrational energy such as sound into electric energy. The photoelectric conversion element has a function of charge separation using the energy of irradiated light such as sunlight. Examples of the photoelectric conversion element include a pin-junction solar cell, a pn-junction solar cell, an amorphous silicon solar cell, a multijunction solar cell, a monocrystalline silicon solar cell, a polycrystalline silicon solar cell, a dye-sensitized solar cell, and an organic thin-film solar cell. Further, the photoelectric conversion element may be stacked with at least one of the cathode 11 and the anode 12 inside the electrochemical reaction structure 10.

The power source 20 is capable of adjusting the current or the voltage that is supplied to the electrochemical reaction structure 10, for example. The power source 20 may have a power controller that adjusts the current or the voltage that is supplied to the electrochemical reaction structure 10, for example. The power source 20 may have a function of adjusting a pressure in the cathode chamber 140 or a pressure in the anode chamber 150 by adjusting the current or the voltage that is supplied to the electrochemical reaction structure 10. The power source 20 may be provided outside the electrochemical reaction device 1.

The electrolytic reactions such as the oxidation reaction and the reduction reaction by the electrochemical reaction structure 10 are preferably carried out under a temperature that is room temperature (for example, 25°C) or higher and 100°C or lower and does not cause the electrolytic solutions to vaporize. The above temperature is preferably 60°C or higher and 95°C or lower, and more preferably 60°C or higher and 80°C or lower. To make the temperature lower than the room temperature, a cooling device such as a chiller is required, which may lower the overall energy efficiency of the system. A temperature over 100°C causes water of the electrolytic solution to turn into vapor to increase resistance, which may lower electrolysis efficiency.

Current density in the cathode 11 is not limited, but to increase the production amount of the reduction product per unit area, the current density is preferably higher. The current density is preferably 100 mA/cm² or more and 1.5 A/cm² or less, and more preferably 300 mA/m² or more and 700 mA/m² or less. The current density being less than 100 mA/cm² results in a small production amount of the reduction product per unit area and thus requires a large area. The current density being over 1.5 A/cm² results in an increase in the hydrogen-producing side reaction to decrease the concentration of the reduction product.

In the case where an increase in the current density is accompanied by an increase in Joule heat since the temperature rises to an appropriate temperature or higher, a cooling mechanism may be provided in or near the electrochemical reaction structure 10. The cooling mechanism may be of a water-cooling type or an air-cooling type. The temperature of the electrochemical reaction structure 10, even if higher than the room temperature, may be left as it is as long as it is 100°C or lower.

The flow path P1 is connected to the inlet of the cathode chamber 140. In the flow path P1, a cathode supply fluid to be supplied to the cathode chamber 140 can flow. The cathode supply fluid contains the reducible material such as carbon dioxide. The cathode supply fluid may be gas containing a gaseous reducible material or the first electrolytic solution containing the reducible material.

The flow path P1 may be connected to a reducible material supply source. The reducible material supply source may have or may be connected to a reducible material separation and recovery device. The reducible material gas from the reducible material separation and recovery device can be supplied to the flow path P1 directly or after being stored once, for example. Examples of the reducible material supply source include a thermal power station, facilities having various kinds of incinerators or combustion furnaces such as a waste incinerator, a steel plant, facilities having a blast furnace, and the like, for example. The reducible material supply source is not limited to any of these facilities and may be any other factory where the reducible material is generated.

The flow path P2 is connected to the inlet of the anode chamber 150. In the flow path P2, an anode supply fluid to be supplied to the anode chamber 150 can flow. The anode supply fluid contains water or the second electrolytic solution. The flow path P2 may be connected to an anode solution supply source. The anode solution supply source is capable of supplying the second electrolytic solution used for the anode supply fluid, for example.

The flow path P3 is connected to the outlet of the cathode chamber 140. In the flow path P3, a cathode discharge fluid discharged from the cathode chamber 140 can flow. The cathode discharge fluid contains the carbon compounds and hydrogen, which are examples of the reduction products produced through the reduction reaction in the cathode 11, and part of the reducible material gas or part of the first electrolytic solution contained in the cathode supply fluid.

The flow path P4 is connected to the outlet of the anode chamber 150. In the flow path P4, an anode discharge fluid discharged from the anode chamber 150 can flow. The anode discharge fluid contains, for example, gaseous oxygen produced through the oxidation reaction in the anode 12, the reducible material that has moved from the cathode chamber 140 or from the electrolytic solution, and part of water or the second electrolytic solution contained in the anode supply fluid.

The flow path P3 may be connected to a valuable material production device. Examples of the valuable material production device include a chemical synthesis device that produces a valuable material through a chemical synthesis using a raw material such as carbon monoxide, or other devices. Examples of the valuable material include methanol produced by a methanol production device, hydrocarbon, synthetic gasoline, light oil, jet fuel produced by a Fischer-Tropsch reactor, an olefin compound produced by an olefin production device, and other valuable materials. Providing the valuable material production device at a subsequent stage of the electrochemical reaction structure 10 makes it possible to produce a valuable material having a high added value from the products in the electrochemical reaction structure 10.

The kind of the chemical synthesis device is not limited as long as it can react and synthesize other substances from the reduction products produced in the cathode 11. Examples of the reaction caused by the chemical synthesis device using the reduction product include a chemical reaction, an electrochemical reaction, a biological conversion reaction using organisms such as algae, enzymes, yeast, and bacteria, and other reactions.

The flow path P3 may be connected to a product separator instead of the valuable material production device. The product separator is capable of separating surplus carbon dioxide from the cathode discharge fluid or separating carbon compounds such as carbon monoxide, which is a product, by removing water in the cathode discharge fluid. For example, in the case where carbon monoxide gas is produced in the electrochemical reaction structure 10 as is shown by Formula (2) below, it is possible to produce methanol through a methanol synthesis or produce jet fuel, light oil, or the like through a Fischer-Tropsch synthesis by using mixed gas containing the produced carbon monoxide gas and hydrogen gas, which is a by-product in the reduction reaction, as a raw material. This is not limiting, and the flow path P3 may be connected to a tank storing gas containing the carbon compound such as carbon monoxide, instead of the valuable material production device.

The first electrolytic solution is preferably a solution high in reducible material absorptance. An existing form of the reducible material in the first electrolytic solution does not necessarily have to be in a dissolved state, and the reducible material in a form of bubbles may be mixed and exist in the first electrolytic solution. Examples of the reducible material-containing electrolytic solution include aqueous solutions containing hydrogen carbonate or carbonate such as lithium hydrogen carbonate (LiHCO₃), sodium hydrogen carbonate (NaHCO₃), potassium hydrogen carbonate (KHCO₃), cesium hydrogen carbonate (CsHCO₃), sodium carbonate (Na₂CO₃), and potassium carbonate (K₂CO₃), phosphoric acid, boric acid, or the like. The reducible material-containing electrolytic solution may contain any of alcohols such as methanol and ethanol, and ketones such as acetone or may be an alcohol solution or a ketone solution. The first electrolytic solution may be an electrolytic solution containing a reducible material absorbent that lowers the reduction potential of the reducible material, has high ion conductivity, and absorbs the reducible material.

As the electrolytic solution such as the first electrolytic solution and the second electrolytic solution, usable is a solution containing water, for example, an aqueous solution containing a desired electrolyte. This solution is preferably an aqueous solution that promotes the oxidation reaction of water. Examples of the aqueous solution containing the electrolyte include aqueous solutions containing phosphate ions (PO₄²⁻), borate ions (BO₃³⁻), sodium ions (Na⁺), potassium ions (K⁺), calcium ions (Ca²⁺), lithium ions (Li⁺), cesium ions (Cs⁺), magnesium ions (Mg²⁺), chloride ions (Cl⁻), hydrogen carbonate ions (HCO₃⁻), carbonate ions (CO₃⁻), hydroxide ions (OH⁻), and the like.

As the aforesaid electrolytic solution, usable is an ionic liquid that is formed of salt of cations such as imidazolium ions or pyridinium ions and anions such as BF₄⁻ or PF₆⁻and that is in a liquid form in a wide temperature range, or its aqueous solution, for example. Other examples of the electrolytic solution include amine solutions such as ethanolamine, imidazole, and pyridine, and their aqueous solutions. Examples of amine include primary amine, secondary amine, tertiary amine, or other amines. These electrolytic solutions may be high in ion conductivity, have a property of absorbing the reducible material, and have a characteristic of decreasing the reduction energy.

Examples of the primary amine include methylamine, ethylamine, propylamine, butylamine, pentylamine, hexylamine, and the like. Hydrocarbon of amine may be replaced by alcohol, halogen, or the like. Examples of the amine whose hydrocarbon is replaced include methanolamine, ethanolamine, chloromethylamine, and the like. Further, an unsaturated bond may be present therein. The same applies to hydrocarbons of the secondary amine and the tertiary amine.

Examples of the secondary amine include dimethylamine, diethylamine, dipropylamine, dibutylamine, dipentylamine, dihexylamine, dimethanolamine, diethanolamine, dipropanolamine, and the like. The replaced hydrocarbons may be different. This also applies to the tertiary amine. Examples of one whose hydrocarbons are different include methylethylamine methylpropylamine, and the like.

Examples of the tertiary amine include trimethylamine, triethylamine, tripropylamine, tributylamine, trihexylamine, trimethanolamine, triethanolamine, tripropanolamine, tributanolamine, trihexanolamine, methyldiethylamine, methyldipropylamine, and the like.

Examples of the cations of the ionic liquid include 1-ethyl-3-methylimidazolium ions, 1-methyl-3-propylimidazolium ions, 1-butyl-3-methylimidazole ions, 1-methyl-3-pentylimidazolium ions, 1-hexyl-3-methylimidazolium ions, and the like.

The second position of the imidazolium ion may be replaced. Examples of the cation resulting from the replacement of the second position of the imidazolium ion include 1-ethyl-2,3-dimethylimidazolium ions, 1,2-dimethyl-3-propylimidazolium ions, 1-butyl-2,3-dimethylimidazolium ions, 1,2-dimethyl-3-pentylimidazolium ions, 1-hexyl-2,3-dimethylimidazolium ions, and the like.

Examples of the pyridinium ions include methylpyridinium, ethylpyridinium, propylpyridinium, butylpyridinium, pentylpyridinium, hexylpyridinium, and the like. In the imidazolium ion and the pyridinium ion, an alkyl group may be replaced, or an unsaturated bond may be present.

Examples of anions include fluoride ions (F⁻), chloride ions (Cl⁻), bromide ions (Br⁻), iodide ions (I⁻), BF₄⁻, PF₆⁻, CF₃COO⁻, CF₃SO₃⁻, NO₃⁻, SCN⁻, (CF₃SO₂)₃C⁻, bis(trifluoromethoxysulfonyl)imide, bis(trifluoromethoxysulfonyl)imide, bis(perfluoroethylsulfonyl)imide, and the like. The ionic liquid may be composed of dipolar ions formed of the cations and the anions that are connected by hydrocarbons. Note that a buffer solution such as a potassium phosphate solution may be supplied to the anode chamber 150.

The second electrolytic solution contains water which is the oxidizable material. Varying the amount of water contained in the first and second electrolytic solutions or changing components of the electrolytic solution can change reactivity to change the selectivity of a reduced substance or a ratio of produced substances. The first and second electrolytic solutions may contain a redox couple as required. Examples of the redox couple include Fe³⁺/Fe²⁺ 10³⁻/I⁻, and the like.

Next, an example of an operation method of the electrochemical reaction device 1 will be described. The description here is about a case of reducing carbon dioxide to produce mainly carbon monoxide and oxidizing water to produce oxygen. The cathode supply fluid containing carbon dioxide is supplied to the cathode chamber 140, the anode supply fluid containing the second electrolytic solution is supplied to the anode chamber 150, and a voltage equal to or higher than an electrolysis voltage is applied between the cathode 11 and the anode 12 by the power source 20 supplying power. Then, the oxidation reaction of water occurs near the anode 12 in contact with the second electrolytic solution. As represented by Formula (1) below, the oxidation reaction of water contained in the second electrolytic solution occurs, electrons are lost, and oxygen and hydrogen ions are produced. The produced hydrogen ions partly move to the cathode chamber 140 through the diaphragm 13.

2H₂O → 4H⁺ + O₂ + 4e⁻ ... (1)

When hydrogen ions (H⁺) produced on the anode 12 side reach near the cathode 11 and electrons (e⁻) are supplied to the cathode 11 from the power source 20, the reduction reaction of carbon dioxide occurs. As represented by Formula (2) below, due to the hydrogen ions (H⁺) having moved to near the cathode 11 and the electrons (e-) supplied from the power source 20, carbon dioxide is reduced and carbon monoxide is produced.

2CO₂ + 4H⁺ + 4e⁻ → 2CO + 2H₂O ... (2)

A gas component contained in the anode discharge fluid discharged from the anode chamber 150 is mainly composed of oxygen gas as shown in Formula (1) above. In the reactions in the cathode 11 and the anode 12, carbon dioxide contained in the cathode supply fluid supplied to the cathode chamber 140 is mostly reduced in the cathode 11 but partly flows as carbon dioxide or as ions such as carbonate ions (CO₃²⁻) or hydrogen carbonate ions (HCO₃⁻) to the anode 12 side. When the pH of the anode solution (second electrolytic solution) becomes, for example, 6 or less, the carbonate ions or the hydrogen carbonate ions having moved to the anode 12 side come to be present as carbon dioxide due to a chemical equilibrium reaction and are partly dissolved in the anode solution. Carbon dioxide gas that cannot be completely dissolved in the anode solution is contained with the oxygen gas in the anode discharge fluid discharged from the anode chamber 150. Under typical operation conditions of the electrochemical reaction structure 10, an abundance ratio of the carbon dioxide gas to the oxygen gas in the anode discharge fluid sometimes increases up to, for example, 2: 1.

The reduction product may contain carbon dioxide, carbon monoxide, and hydrogen produced through an electrolysis of water. The concentration of hydrogen can be adjusted as desired depending on how it is used. In the case where hydrogen is used in the chemical synthesis device, the cathode discharge fluid may be used after the carbon dioxide is separated therefrom because a mixture of carbon monoxide and hydrogen is used. In the case where hydrogen is not used, only carbon monoxide is separated from the cathode discharge fluid. In the case where methanol is produced, it is possible to use hydrogen produced in the cathode 11 as a valuable material by adjusting the number of moles of hydrogen to about twice the number of moles of carbon monoxide. On the other hand, in the cathode 11, it is possible to adjust the concentration of hydrogen in the reduction product to a value within a range of 0.1% or more and 5% or less in terms of volume percentage by setting the reaction condition so as to inhibit the hydrogen-producing side reaction. This makes it possible to use the electrochemical reduction device as a carbon monoxide production device that produces high-concentration carbon monoxide.

Here, an example structure of the diaphragm 13 is further explained. FIG. 2 is a cross-sectional schematic view for explaining the example structure of the diaphragm. FIG. 2 illustrates the cathode 11, the anode 12, the diaphragm 13, the flow path plate 14, and the flow path plate 15.

The diaphragm 13 contains chemical species (also called quenchers or inhibitors) that decompose, capture (retain), or inactivate active oxygen species produced by the electrochemical reaction structure 10. The active oxygen species are highly reactive oxygen species such as hydrogen peroxide, superoxide anion radicals, hydroxyl radicals, and singlet oxygen.

The chemical species are cerium (Ce), manganese (Mn), cobalt (Co), platinum (Pt), ruthenium (Ru), and tungsten (W), and metals, metal oxides, or metal hydroxides containing at least one metal element of tin (Sn), iridium (Ir), cesium (Cs), silver (Ag), iron (Fe), and aluminum (Al). Preferred examples of metals are Ce, Mn, Co, Pt, Ru, W, or Sn. Particularly preferred examples are Ce, Mn, or Co. Examples of metal oxides include MnO, Mn₃O₄, MnO₂, MnO₃, Mn₂O₇, CoO, Co₂O₃, Co₃O₄, and CeO₂. Examples of metal hydroxides include Mn(OH)₂, MnO(OH), MnO(OH)₂, and Ce(OH)₄. The chemical species may, for example, adhere to a surface of a material forming the diaphragm 13.

The decomposition of the active oxygen species is performed, for example, by converting the active oxygen species to water and oxygen through radical reactions.

The capture of the active oxygen species is performed, for example, by stable radical compounds, which react with the generated active oxygen species and convert them into inert reactants.

The inactivation of the active oxygen species is performed, for example, by suppressing radicals generated from the active oxygen species.

The diaphragm 13 has a surface 13a facing the cathode 11 and a surface 13b facing the anode 12. The diaphragm 13 has a concentration gradient where the concentration of the chemical species decreases from the surface 13b to the surface 13a. The chemical species are more present in a region R2 on the surface 13b side (near the anode 12) and less present in a region R1 on the surface 13a side (near the cathode 11) of the diaphragm 13. This is because hydrogen, a by-product of electrolysis of the reducible material generated on the cathode 11 side, diffuses through the diaphragm 13, is oxidized on the anode 12 side, and reacts to the active oxygen species such as hydrogen peroxide. Since the concentration of the chemical species is the highest in the region R2, the decomposition reaction by the active oxygen species occurs from the surface 13b in the diaphragm 13.

The region R1 includes the surface 13a and has a first thickness of 0.1 to 0.003 times the thickness of the diaphragm 13 from the surface 13a. The region R2 includes the surface 13b and has a second thickness of 0.1 to 0.003 times the thickness of the diaphragm 13 from the surface 13b.

On the other hand, when the chemical species are also more present in the region R1, they may act as the reduction catalyst for the cathode 11. When the chemical species are present in contact with the cathode 11, they may cause hydrogen production by reduction of hydrogen ions produced from water instead of the reduction reaction of the reducible material, which is the objective.

When the diaphragm 13 contains the chemical species, they may inhibit ion diffusion of the second electrolytic solution in the diaphragm 13. When the chemical species are also contained in a large amount in the region R1, the ion diffusion will be greatly affected. Therefore, the inhibition of ion diffusion can be suppressed by increasing the concentration of the chemical species in the region R2.

It is important that the chemical species be directly contained in the diaphragm 13 to prevent degradation of the diaphragm 13. It is known that metals that are effective in decomposing, capturing, or inactivating the active oxygen species, such as platinum, are used as the oxidation catalyst for the anode 12, and the presence of the metal in the diaphragm 13 decomposes, captures, or inactivates the active oxygen species before the decomposition reaction of the diaphragm 13 by the active oxygen species dissolved in the second electrolytic solution proceeds.

When the diaphragm 13 is formed using the resin material, the diaphragm 13 has carbon contained in the resin material and metal elements contained in the chemical species. A ratio of metal atoms to 100 carbon atoms in the region R2 is preferably 3 or more and 24 or less, more preferably 4 or more and 18 or less. In other words, an atomicity ratio of the metal element to carbon (second atomicity ratio) in the region R2 is preferably 0.03 or more and 0.24 or less, more preferably 0.04 or more and 0.18 or less. When it is 3 (0.03) or less, the effect of decomposing, retaining, and inactivating the active oxygen species in the chemical species decreases, and when it is 24 (0.04) or more, the ion diffusion of the electrolytic solution in the diaphragm 13 is inhibited. The ratio of metal atoms to 100 carbon atoms in the region R1 is preferably smaller than the ratio of metal atoms to 100 carbon atoms in the region R2 and is preferably 0 or more and 6 or less, more preferably 1 or more and 3 or less. In other words, the atomicity ratio of the metal element to carbon in the region R1 (first atomicity ratio) is preferably smaller than the second atomicity ratio, and preferably 0 or more and 0.06 or less, and more preferably 0.01 or more and 0.03 or less.

The carbon and metal atoms in the regions R1 and R2 can be observed, for example, by using X-ray photoelectron spectroscopy to observe preferably five or more observation areas on the surfaces 13a and 13b of the diaphragm, and the first and second atomicity ratios can be calculated by the average number of atoms of each atom in these observation areas.

When the diaphragm 13 is an inorganic material film with the metal element of the chemical species and without carbon, an amount of the chemical species can be adjusted in an appropriate range in terms of mass percent, since it may not be possible to adjust the mass on a carbon atom basis. In this case, the concentration of the metal element in the region R2 (second concentration) is preferably 4.5 mass% or more and 36 mass% or less, more preferably 6 mass% or more and 27 mass% or less. The concentration of the metal element in the region R1 (first concentration) is preferably lower than the second concentration. The first concentration is preferably 0 mass% or more and 9 mass% or less, more preferably 1 mass% or more and 5 mass% or less.

In the electrochemical reaction device 1, the electrochemical reaction device 1 can achieve high Faraday efficiency of the reduction products and improve durability by forming the concentration gradient in which the concentration of the chemical species decreases from the anode 12 side to the cathode 11 side of the diaphragm 13. Therefore, the life of the electrochemical reaction device 1 can be prolonged.

The chemical species are preferably precipitated on the surface or inside of the diaphragm 13 by the electrochemical reaction by applying a voltage between the cathode 11 and anode 12 after a precursor substance is contained on the surface or inside of the anode 12. This can form the concentration gradient of the chemical species in the diaphragm 13, with the higher concentration of the chemical species in the region R2 and the lower concentration of the chemical species in the region R1. Examples of precursors to be contained in the anode 12 include oxides, hydroxides, chlorides, and complexes of metals.

### EXAMPLES

Electrochemical reaction devices of Examples 1, 2, 3, and 4 and Comparative Example 1 were fabricated. Further, to evaluate durability and electrolysis efficiency characteristics, the cathode supply fluid containing carbon dioxide was supplied to the cathode flow path, the anode supply fluid containing potassium hydrogen carbonate at a concentration of 0.1 mol/L as the electrolytic solution was supplied to the anode flow path, and each electrochemical reaction device was operated with a 700 mA/cm² current density under the following condition. The power source 20 controlled the voltage to pass the current with the current density of 700 mA/cm² between the cathode 11 and the anode 12, carbon monoxide was produced through the reduction of carbon dioxide in the cathode 11, and oxygen was produced through the oxidation of water in the anode 12. Further, the cathode discharge fluid discharged from the cathode flow path was collected, and through an analysis of the cathode discharge fluid, Faraday efficiency in the carbon monoxide production was calculated.

According to a change in the Faraday efficiency in the carbon monoxide production, each electrochemical reaction device was evaluated as follows. The electrochemical reaction device with the carbon monoxide production Faraday efficiency of 80% or higher was evaluated as ○ (FE: Good), and the electrochemical reaction device with the carbon monoxide production Faraday efficiency of less than 80% was evaluated as × (FE: Bad). The electrochemical reaction device where the time from the start of operation until the carbon monoxide generation Faraday efficiency decreased by 10% was less than 100 hours was evaluated as × (Durability: Bad), the electrochemical reaction device where the time was more than 100 hours was evaluated as ○ (Durability: Good).

### (Comparative Example 1)

A 0.5 mol/L cobalt chloride solution was prepared in a 9:1 mixture of ethanol and water. A porous resin diaphragm used as the diaphragm 13 was immersed into this solution, removed, and dried. It was then dried in a dryer at 60°C for 5 hours. Using this diaphragm, the electrochemical reaction device illustrated in FIG. 1 was fabricated. The evaluation results of the electrochemical reaction device in Comparative Example 1 were × (FE: Bad) and ○ (Durability: Good). The X-ray photoelectron spectroscopy measurements were performed, and it was confirmed that cobalt atoms were uniformly deposited on the anode 12 side and the cathode 11 side. This indicates that no concentration gradient was formed. The presence of cobalt atoms in the diaphragm 13 inhibited the ion diffusion of the electrolytic solution in the diaphragm 13, resulting in lower electrolysis efficiency. These results are shown in Table 1.

### (Example 1)

An iridium-coated titanium porous body used as the anode 12 was immersed in the same cobalt chloride solution as in Comparative Example 1, removed, and dried. The porous body was then sintered at 450°C for 1 hour in an electric furnace to fabricate the anode 12. The electrochemical reaction device illustrated in FIG. 1 was fabricated using this anode 12. The device was then temporarily operated for 1 hour under the above operating conditions to transfer the chemical species that decompose, capture, or inactivate the active oxygen species to the diaphragm 13. The electrochemical reaction device was disassembled, the diaphragm 13 was taken out, and amounts of carbon atoms and metal atoms (cobalt atoms) were compared by the X-ray photoelectron spectroscopy. The anode 12 side had cobalt atoms in the ratio of 12 to 100 carbon atoms, while the cathode 11 side had cobalt atoms in the ratio of 0.1 or less and was hardly detected. In other words, the atomicity ratio (M/C) of the metal element (cobalt) to carbon in the region R2 was 0.12, and the atomicity ratio of cobalt to carbon in the region R1 was 0.001 or less. In addition, the electrochemical reaction device was fabricated again by the same process. The results of the evaluation of the electrochemical reaction device of Example 1 were ○ (FE: Good) and ○ (Durability: Good). These results are shown in Table 1.

### (Example 2)

The anode 12 was fabricated by coating a titanium non-woven fabric with ruthenium, cobalt, and tin oxides as catalysts. An elemental ratio of ruthenium, cobalt, and tin fabricated was 10:10:3. The electrochemical reaction device illustrated in FIG. 1 was fabricated as in Example 1, except that this anode 12 was used. The device was then temporarily operated for 1 hour under the above operating conditions to transfer the chemical species that decompose, capture, or inactivate the active oxygen species to the diaphragm 13. The electrochemical reaction device was disassembled, the diaphragm 13 was taken out, and the amounts of carbon and cobalt atoms were compared by the X-ray photoelectron spectroscopy. The anode 12 side had the chemical species that decompose, capture, or inactivate the active oxygen species with cobalt atoms in the ratio of 15 to 100 carbon atoms, while the cathode 11 side had cobalt atoms in the ratio of 0.1 or less and was hardly detected. In other words, the atomicity ratio (M/C) of the metal element (cobalt) to carbon in the region R2 was 0.15, and the atomicity ratio of cobalt to carbon in the region R1 was 0.001 or less. Further, the electrochemical reaction device was fabricated again by the same process. The results of the evaluation of the electrochemical reaction device of Example 2 were ○ (FE: Good) and ○ (Durability: Good). These results are shown in Table 1.

### (Example 3)

A 0.5 mol/L manganese chloride solution was prepared in a 9:1 mixture of ethanol and water. An iridium-coated titanium porous body used as the anode 12 was immersed into this solution, removed, and dried. The porous body was then sintered at 600°C for 2 hours in an electric furnace to fabricate the anode 12. The electrochemical reaction device illustrated in FIG. 1 was fabricated as in Example 1, except that this anode 12 was used. The device was then temporarily operated for 1 hour under the above operating conditions to transfer the chemical species that decompose, capture, or inactivate the active oxygen species to the diaphragm 13. The electrochemical reaction device was disassembled, the diaphragm 13 was taken out, and the amounts of carbon and manganese atoms were compared by the X-ray photoelectron spectroscopy. The anode 12 side had manganese atoms in the ratio of 8 to 100 carbon atoms, while the cathode 11 side had manganese atoms in the ratio of 0.1 or less and was hardly detected. In other words, the atomicity ratio (M/C) of the metal element (manganese) to carbon in the region R2 was 0.08, and the atomicity ratio of manganese to carbon in the region R1 was 0.001 or less. Further, the electrochemical reaction device was fabricated again by the same process. The results of the evaluation of the electrochemical reaction device of Example 3 were ○ (FE: Good) and ○ (Durability: Good). These results are shown in Table 1.

### (Example 4)

A 0.05 mol/L bis(acetylacetonato)platinum solution was prepared using acetone. The iridium-coated titanium porous body used as the anode 12 was immersed in this solution, removed, and dried. The porous body was then sintered in an electric furnace at 450°C for 1 hour to produce the anode 12. The electrochemical reaction device illustrated in FIG. 1 was fabricated as in Example 1, except that this anode 12 was used. The device was then temporarily operated for 1 hour under the above operating conditions to transfer the chemical species that decompose, capture, or inactivate the active oxygen species to the diaphragm 13. The electrochemical reaction device was disassembled, the diaphragm 13 was taken out, and the amounts of carbon and platinum atoms were compared by the X-ray photoelectron spectroscopy. The anode 12 side had platinum atoms in the ratio of 5 to 100 carbon atoms, while the cathode 11 side had platinum atoms in the ratio of 0.1 or less and was hardly detected. In other words, the atomicity ratio (M/C) of the metal element (platinum) to carbon in the region R2 was 0.05, and the atomicity ratio of platinum to carbon in the region R1 was 0.001 or less. Further, the electrochemical reaction device was fabricated again by the same process. The results of the evaluation of the electrochemical reaction device in Example 4 were ○ (FE: Good) and ○ (durability: Good). These results are shown in Table 1.

**[Table 1]**

| | Chemical species | R1 (Cathode side) | R2 (Anode side) | FE | Durability |
|---|---|---|---|---|---|
| | | M/C | M/C | | |
| Example 1 | Cobalt species | ≤0.001 | 0.12 | ○ | ○ |
| Comparative example 1 | Cobalt species | - | - | × | ○ |
| Example 2 | Cobalt species | ≤0.001 | 0.15 | ○ | ○ |
| Example 3 | Manganese species | ≤0.001 | 0.08 | ○ | ○ |
| Example 4 | Platinum species | ≤0.001 | 0.05 | ○ | ○ |

As can be seen from Table 1, high Faraday efficiency of the reduction products can be achieved and durability can be improved in the electrochemical reaction devices, thus prolonging the life of electrochemical reaction devices by forming the concentration gradient of the chemical species from the anode 12 side to the cathode 11 side of the diaphragm 13.

It should be noted that the configurations of the above-described arrangements are applicable in combination. Further, they are partly replaceable. While certain arrangements of the present invention have been described here, these arrangements have been presented by way of example only, and are not intended to limit the scope of the inventions. Indeed, the arrangements described herein may be embodied in a variety of other forms; furthermore, various omissions, substitutions, and changes in the form of the arrangements described herein may be made without departing from the spirit of the inventions. The accompanying claims and their equivalents are intended to cover such forms or modifications as would fall within the scope and spirit of the inventions.

The above-described arrangements can be summarized in the following clauses.

### (Clause 1)

An electrochemical reaction device comprising:
an electrochemical reaction structure comprising
   a cathode having a reduction catalyst that promotes a reduction reaction of reducing a reducible material to produce a reduction product, the reducible material being carbon dioxide or nitrogen,
   an anode having an oxidation catalyst that promotes an oxidation reaction of oxidizing water to produce oxygen,
   a diaphragm having a first surface facing on the cathode and a second surface facing on the anode,
   a cathode flow path facing on the cathode, and
   an anode flow path facing on the anode;
a first flow path connected to an inlet of the cathode flow path and through which a first fluid flows, the first fluid being supplied to the cathode flow path and containing the reducible material;
a second flow path connected to an inlet of the anode flow path and through which a second fluid flows, the second fluid being supplied to the anode flow path and containing the water;
a third flow path connected to an outlet of the cathode flow path and through which a third fluid flows, the third fluid being discharged from the cathode flow path and containing the reduction product; and
a fourth flow path connected to an outlet of the anode flow path and through which a fourth fluid flows, the fourth fluid being discharged from the anode flow path and containing the water and the oxygen, wherein
the diaphragm has a concentration gradient in which a concentration of a chemical species decreases from the second surface to the first surface, the chemical species being configured to decompose, capture, or inactivate an active oxygen species.

### (Clause 2)

The electrochemical reaction device according to clause 1, wherein
the diaphragm has carbon and a metal element, and
the diaphragm has:
   a first region including the first surface and having a first atomicity ratio of the metal element to the carbon; and
   a second region including the second surface and having a second atomicity ratio of the metal element to the carbon, wherein
   the second atomicity ratio is 0.03 or more and 0.24 or less; and
   the first atomicity ratio is smaller than the second atomicity ratio.

### (Clause 3)

The electrochemical reaction device according to clause 2, wherein
the first atomicity ratio is 0 or more and 0.06 or less.

### (Clause 4)

The electrochemical reaction device according to clause 1, wherein
the diaphragm has the metal element and does not have carbon,
the diaphragm has
   a first region including the first surface and having a first concentration of the metal element, and
   a second region including the second surface and having a second concentration of the metal element,
the second concentration is 4.5 mass% or more and 36 mass% or less, and
the first concentration is lower than the second concentration.

### (Clause 5)

The electrochemical reaction device according to clause 4, wherein
the first concentration is 0 mass% or more and 9 mass% or less.

### (Clause 6)

The electrochemical reaction device according to any one of clauses 1 to 5, wherein
the chemical species is metal, metal oxide, or metal hydroxide containing at least one metal element selected from the group consisting of cerium, manganese, cobalt, platinum, ruthenium, tungsten, and tin.

### (Clause 7)

The electrochemical reaction device according to any one of clauses 1 to 6, wherein
the active oxygen species is hydrogen peroxide, superoxide anion radicals, hydroxyl radicals, or singlet oxygen.

### (Clause 8)

The electrochemical reaction device according to any one of clauses 1 to 7, wherein
the reduction catalyst is configured to promote a chemical reaction of reducing the carbon dioxide to produce a carbon compound.

### (Clause 9)

The electrochemical reaction device according to any one of clauses 1 to 7, wherein
the reduction catalyst is configured to promote a chemical reaction of reducing the nitrogen to produce ammonia.

### (Clause 10)

A method of manufacturing an electrochemical reaction device,
the electrochemical reaction device comprising:
a cathode having a reduction catalyst that promotes a reduction reaction of reducing a reducible material to produce a reduction product, the reducible material being carbon dioxide or nitrogen;
an anode having an oxidation catalyst that promotes an oxidation reaction of oxidizing water to produce oxygen;
a diaphragm having a first surface facing on the cathode and a second surface facing on the anode;
a cathode chamber facing on the cathode; and
an anode chamber facing on the anode,
the method comprising:
   forming a precursor of a chemical species configured to decompose, capture, or inactivate an active oxygen species in the anode; and
   applying a voltage between the cathode and the anode to transfer the precursor to the diaphragm to form a concentration gradient where a concentration of the chemical species in the diaphragm decreases from the second surface to the first surface.

## Claims

1. An electrochemical reaction device comprising:
an electrochemical reaction structure comprising
a cathode having a reduction catalyst that promotes a reduction reaction of reducing a reducible material to produce a reduction product, the reducible material being carbon dioxide or nitrogen,
an anode having an oxidation catalyst that promotes an oxidation reaction of oxidizing water to produce oxygen,
a diaphragm having a first surface facing on the cathode and a second surface facing on the anode,
a cathode flow path facing on the cathode, and
an anode flow path facing on the anode;
a first flow path connected to an inlet of the cathode flow path and through which a first fluid flows, the first fluid being supplied to the cathode flow path and containing the reducible material;
a second flow path connected to an inlet of the anode flow path and through which a second fluid flows, the second fluid being supplied to the anode flow path and containing the water;
a third flow path connected to an outlet of the cathode flow path and through which a third fluid flows, the third fluid being discharged from the cathode flow path and containing the reduction product; and
a fourth flow path connected to an outlet of the anode flow path and through which a fourth fluid flows, the fourth fluid being discharged from the anode flow path and containing the water and the oxygen, wherein
the diaphragm has a concentration gradient in which a concentration of a chemical species decreases from the second surface to the first surface, the chemical species being configured to decompose, capture, or inactivate an active oxygen species.

2. The device according to claim 1, wherein
the diaphragm has carbon and a metal element, and
the diaphragm has:
a first region including the first surface and having a first atomicity ratio of the metal element to the carbon; and
a second region including the second surface and having a second atomicity ratio of the metal element to the carbon, wherein
the second atomicity ratio is 0.03 or more and 0.24 or less; and
the first atomicity ratio is smaller than the second atomicity ratio.

3. The device according to claim 2, wherein
the first atomicity ratio is 0 or more and 0.06 or less.

4. The device according to claim 1, wherein
the diaphragm has the metal element and does not have carbon,
the diaphragm has
a first region including the first surface and having a first concentration of the metal element, and
a second region including the second surface and having a second concentration of the metal element, and
the second concentration is 4.5 mass% or more and 36 mass% or less, and
the first concentration is lower than the second concentration.

5. The device according to claim 4, wherein
the first concentration is 0 mass% or more and 9 mass% or less.

6. The device according to any one of claims 1 to 5, wherein
the chemical species is metal, metal oxide, or metal hydroxide containing at least one metal element selected from the group consisting of cerium, manganese, cobalt, platinum, ruthenium, tungsten, and tin.

7. The device according to any one of claims 1 to 6, wherein
the active oxygen species is hydrogen peroxide, superoxide anion radicals, hydroxyl radicals, or singlet oxygen.

8. The device according to any one of claims 1 to 7, wherein
the reduction catalyst is configured to promote a chemical reaction of reducing the carbon dioxide to produce a carbon compound.

9. The device according to any one of claims 1 to 7, wherein
the reduction catalyst is configured to promote a chemical reaction of reducing the nitrogen to produce ammonia.

10. A method of manufacturing an electrochemical reaction device,
the electrochemical reaction device comprising:
a cathode having a reduction catalyst that promotes a reduction reaction of reducing a reducible material to produce a reduction product, the reducible material being carbon dioxide or nitrogen;
an anode having an oxidation catalyst that promotes an oxidation reaction of oxidizing water to produce oxygen;
a diaphragm having a first surface facing on the cathode and a second surface facing on the anode;
a cathode chamber facing on the cathode; and
an anode chamber facing on the anode,
the method comprising:
forming a precursor of a chemical species configured to decompose, capture, or inactivate an active oxygen species in the anode; and
applying a voltage between the cathode and the anode to transfer the precursor to the diaphragm to form a concentration gradient where a concentration of the chemical species in the diaphragm decreases from the second surface to the first surface.

11. The method according to claim 10, wherein
the diaphragm has carbon and a metal element, and
the diaphragm has:
a first region including the first surface and having a first atomicity ratio of the metal element to the carbon; and
a second region including the second surface and having a second atomicity ratio of the metal element to the carbon, wherein
the second atomicity ratio is 0.03 or more and 0.24 or less; and
the first atomicity ratio is smaller than the second atomicity ratio.

12. The method according to claim 11, wherein
the first atomicity ratio is 0 or more and 0.06 or less.

13. The method according to claim 10, wherein
the diaphragm has the metal element and does not have carbon,
the diaphragm has
a first region including the first surface and having a first concentration of the metal element, and
a second region including the second surface and having a second concentration of the metal element, wherein
the second concentration is 4.5 mass% or more and 36 mass% or less, and
the first concentration is lower than the second concentration.

14. The method according to claim 13, wherein
the first concentration is 0 mass% or more and 9 mass% or less.

15. The method according to any one of claims 10 to 14, wherein
the chemical species is metal, metal oxide, or metal hydroxide containing at least one metal element selected from the group consisting of cerium, manganese, cobalt, platinum, ruthenium, tungsten, and tin.
